# EUROPÄISCHE PATENTSCHRIFT

(11) **EP 2 078 584 B1**
(45) Veröffentlichungstag und Bekanntmachung des Hinweises auf die Patenterteilung: **01.09.2010**
(21) Anmeldenummer: 08000521.8
(22) Anmeldetag: 12.01.2008
(51) Int. Cl.: B23K 26/14

(54) **Maschinelle Vorrichtung zur Montage und/oder zur Demontage einer Laserdüse sowie Laserbearbeitungsmaschine mit einer derartigen maschinellen Vorrichtung**
Mechanical device for assembling and/or disassembling a laser nozzle and laser processing machine with such a device
Dispositif mécanique destiné au montage et/ou au démontage d'une tuyère laser et machine de traitement laser dotée d'un tel dispositif mécanique

(43) Veröffentlichungstag der Anmeldung: 15.07.2009
(73) Patentinhaber: Trumpf Maschinen AG, 6341 Baar (CH)
(72) Erfinder: Erlenmaier, Werner, 70839 Gerlingen (DE); Schmauder, Frank, 72555 Metzingen (DE); Felber, Armin, 8807 Freienbach (CH); Gedeon, Reto, 6331 Hünenberg (CH)
(74) Vertreter: Kohler Schmid Möbus

(56) Entgegenhaltungen:
- JP-A- 6 023 580

## Beschreibung

Die Erfindung betrifft eine maschinelle Vorrichtung zur Montage und/oder zur Demontage einer Laserdüse an einer Düsenaufnahme einer Laserbearbeitungsmaschine zum Bearbeiten von Werkstücken, insbesondere von Blechen,
- mit einem Düsenmagazin, das wenigstens einen zür Aüfnahme einer Laserdüse vorgesehenen Düsenlagerplatz aufweist,
- mit einer an der maschinellen Vorrichtung vorgesehenen Funktionsbereitschaftsposition sowie
- mit einer Positioniervorrichtung für den Düsenlagerplatz,
wobei der Düsenlagerplatz mittels der hierfür vorgesehenen Positioniervorrichtung in die Funktionsbereitschaftsposition oder in eine von der Funktionsbereitschaftsposition abliegende Position bewegbar ist. Die Erfindung betrifft des weiteren eine Laserbearbeitungsmaschine zum Bearbeiten von Werkstücken, insbesondere von Blechen, wobei die Laserbearbeitungsmaschine eine maschinelle Vorrichtung der vorstehenden Art aufweist.

Gattungsgemäßer Stand der Technik ist bekannt aus JP 06 023580 A. Diese Druckschrift offenbart eine Laserbearbeitungsmaschine mit einer maschinellen Vorrichtung zum Düsenwechsel an einem Laserbearbeitungskopf der Laserbearbeitungsmaschine. Ein Düsenmagazin der Vorrichtung zum Düsenwechsel ist als Revolvermagazin ausgebildet und besitzt einen um eine Revolver-Drehachse drehbaren Magazinrevolver. An dem Magazinrevolver sind mehrere Düsenlagerplätze vorgesehen, die in Drehrichtung des Magazinrevolvers um die Revolver-Drehachse aufeinander folgen. Durch Drehen des Magazinrevolvers um die Revolver-Drehachse wird einer der Düsenlagerplätze in eine Funktionsbereitschaftsposition überführt. Befindet sich ein leerer Düsenlagerplatz in der Funktionsbereitschaftsposition, so kann der Düsenlagerplatz eine gebrauchte Laserdüse aufnehmen, die zuvor an dem Laserbearbeitungskopf der vorbekannten Maschine im Einsatz war und die an der Düsenaufnahme des Laserbearbeitungskopfes zu demontieren ist. Nimmt ein Düsenlagerplatz mit einer einzuwechselnden Laserdüse die Funktionsbereitschaftsposition ein, so kann die einzuwechselnde Laserdüse als Ersatz für eine zuvor demontierte gebrauchte Laserdüse an dem Laserbearbeitungskopf montiert werden. Einer der Düsenlagerplätze des Magazinrevolvers ist während des regulären Betriebes der vorbekannten Laserbearbeitungsmaschine in die Funktionsbereitschaftsposition bewegt und dabei zu dem Laserbearbeitungskopf hin angeordnet.

Den Stand der Technik hinsichtlich seiner Funktionssicherheit weiterzubilden, hat sich die vorliegende Erfindung zum Ziel gesetzt.

Erfindungsgemäß gelöst wird diese Aufgabe durch die maschinelle Vorrichtung gemäß Patentanspruch 1 sowie durch die Laserbearbeitungsmaschine gemäß Patentanspruch 8.

Im Falle der Erfindung ist ein Schmutzsammler vorgesehen, der an Stelle eines Düsenlagerplatzes in die Funktionsbereitschaftsposition an der maschinellen Vorrichtung bewegt werden kann. Von dieser Möglichkeit wird insbesondere bei Betriebszuständen der Laserbearbeitungsmaschine Gebrauch gemacht, im Falle derer an der Funktionsbereitschaftsposition in verstärktem Maße Schmutz anfällt. Dies ist etwa dann der Fall, wenn mittels der Laserbearbeitungsmaschine eine reguläre Werkstückbearbeitung durchgeführt wird. Als Verschmutzungen in Frage kommen beispielsweise Schlacke und Metallspritzer, wie sie bei der schneidenden Laserbearbeitung von Blechen erzeugt werden. Der in der Funktionsbereitschaftsposition befindliche Schmutzsammler nimmt die anfallenden Schmutzpartikel auf, während der oder die Düsenlagerplätze des Düsenmagazins abseits der schneidkopfnahen Funktionsbereitschaftsposition angeordnet und dadurch gegen unerwünschte Verschmutzung geschützt sind. Auf diese Art und Weise wird sowohl eine Verschmutzung leerer Düsenlagerplätze als auch eine Verschmutzung von Düsenlagerplätzen vermieden, die mit einer Laserdüse belegt sind. Eine Verschmutzung leerer Düsenlagerplätze könnte beispielsweise eine funktionsgerechte Lagerung einer gebrauchten Laserdüse an dem betreffenden Düsenlagerplatz beeinträchtigen. Eine Verschmutzung von Düsenlagerplätzen, die mit einer einzuwechselnden Laserdüse belegt sind, könnte insbesondere zu Problemen bei der Montage der betreffenden Laserdüse an der Düsenaufnahme der Laserbearbeitungsmaschine führen.

Besondere Ausführungsarten der Erfindung gemäß den Patentansprüchen 1 und 8 ergeben sich aus den abhängigen Patentansprüchen 2 bis 7.

Die Patentansprüche 2 und 3 betreffen steuerungstechnisch besonders einfache Möglichkeiten zur Überführung von Schmutzsammler und Düsenlagerplatz in die Funktionsbereitschaftsposition bzw. in eine von der Funktionsbereitschaftsposition abliegende Position.

Die Erfindungsbauart gemäß Patentanspruch 4 zeichnet sich durch eine konstruktiv einfache und kostengünstige Konfiguration des Positionierantriebes von Schmutzsammler und Düsenlagerplatz aus.

Ausweislich Patentanspruch 5 ist in weiterer vorteilhafter Ausgestaltung der Erfindung vorgesehen, dass der Düsenlagerplatz und/oder der Schmutzsammler entlang einer Kreisbahn in die Funktionsbereitschaftsposition oder in eine von der Funktionsbereitschaftsposition abliegende Position bewegbar ist bzw. sind. Die anspruchsgemäße Kreisgeometrie der Bewegungsbahn von Schmutzsammler und Düsenlagerplatz ermöglicht eine kompakte Bauweise der Gesamtanordnung.

Eine konstruktiv einfache Möglichkeit zur Realisierung einer kreisförmigen Positionierbewegung von Schmutzsammler und Düsenlagerplatz ist im Falle der Erfindungsbauart nach Patentanspruch 6 vorgesehen.

Ausweislich Patentanspruch 7 bildet der Schmutzsammler in Weiterbildung der Erfindung einen Schmutzdurchtritt aus, durch welchen Schmutz die maschinelle Vorrichtung passieren kann. Auf diese Art und Weise können Schmutzpartikel auf einfache Art und Weise aus dem Nahbereich der maschinellen Vorrichtung in Bereiche abgeführt werden, in denen sie die Funktionsfähigkeit der maschinellen Vorrichtung nicht beeinträchtigen können.

Nachfolgend wird die Erfindung anhand beispielhafter schematischer Darstellungen näher erläutert. Es zeigen:
- Fig. 1: eine maschinelle Düsenwechselvorrichtung mit einem Düsen- magazin mit Düsenlagerplätzen sowie mit einem Schmutz- sammler in der Funktionsbereitschaftsposition,
- Fig. 2: die maschinelle Düsenwechselvorrichtung gemäß Figur 1 mit einem Düsenlagerplatz des Düsenmagazins in der Funktions- bereitschaftsposition,
- Fig. 3: eine stark schematisierte Darstellung einer Laserbearbei- tungsmaschine mit einer maschinellen Düsenwechselvorrich- tung gemäß Figur 1 und
- Fig. 4: die Anordnung gemäß Figur 3 mit einer maschinellen Düsen- wechselvorrichtung gemäß Figur 2.

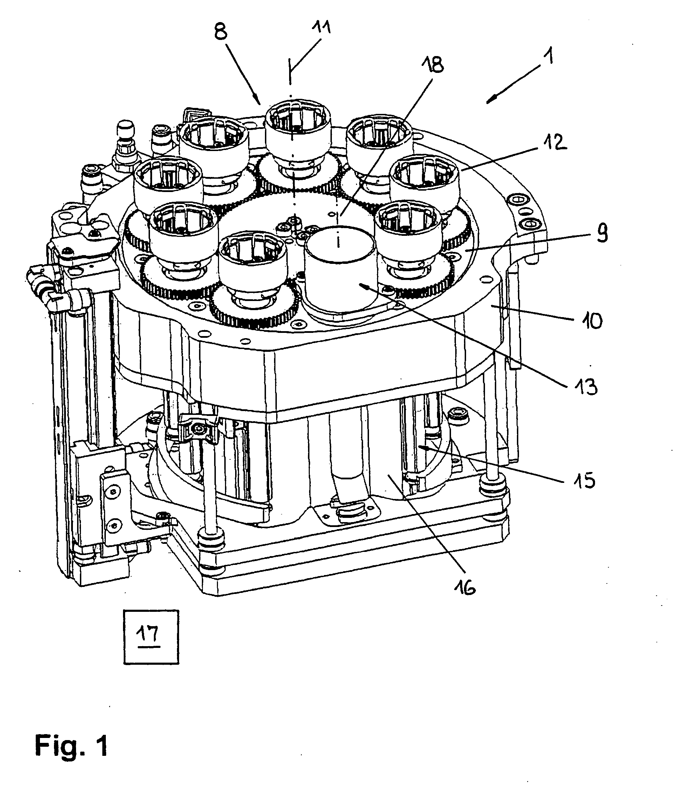

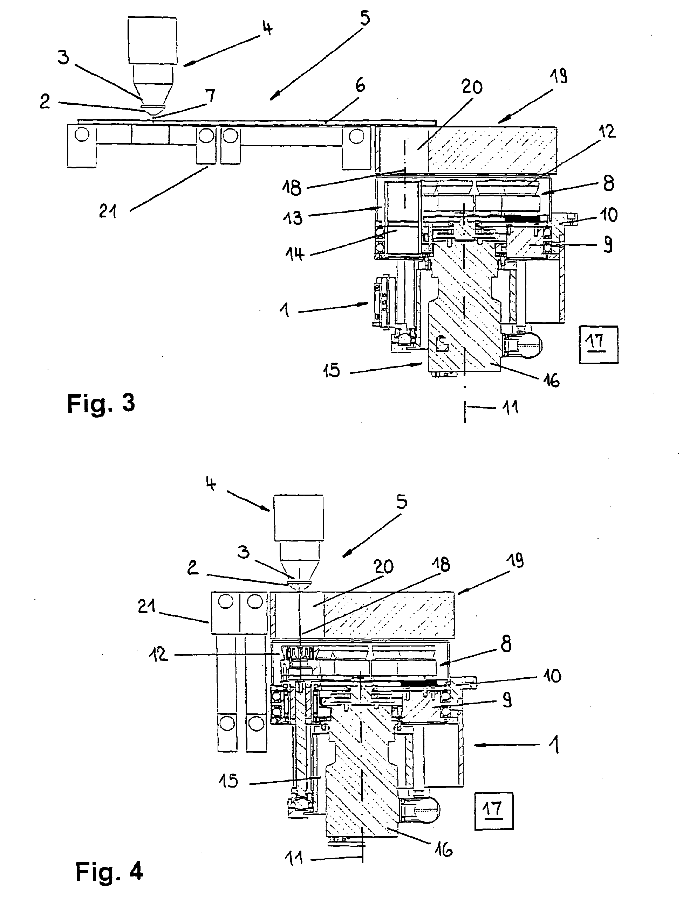

Eine in den Figuren 1 bis 4 dargestellte Düsenwechselvorrichtung 1 dient zur maschinellen Montage und Demontage von Laserdüsen 2 an einer Düsenaufnahme 3, die ihrerseits an einem Laserbearbeitungskopf 4 einer Laserbearbeitungsmaschine 5 vorgesehen ist. Ausweislich Figur 3 wird bei regulärem Betrieb der Laserbearbeitungsmaschine 5 ein Blech 6 mittels eines Laserschneidstrahls 7 geschnitten.

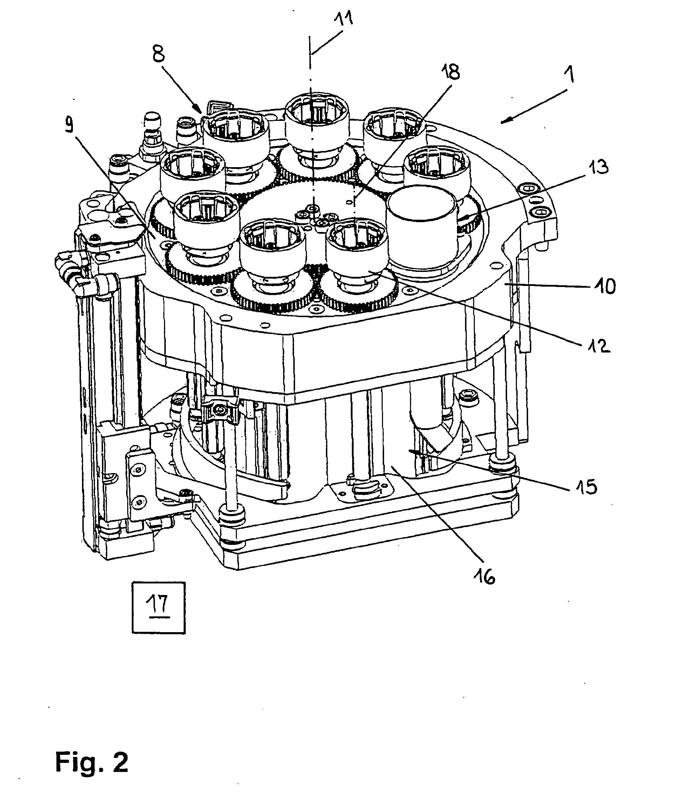

Die Düsenwechselvorrichtung 1 besitzt ein Düsenmagazin 8 mit einem Tragrevolver 9, der an einem Gehäuse 10 der Düsenwechselvorrichtung 1 um eine Revolver-Drehachse 11 drehbar und dabei in Drehrichtung positionierbar ist. Der Tragrevolver 9 ist mit einer Mehrzahl von als Düsenhalter ausgebildeten Düsenlagerplätzen 12 des Düsenmagazins 8 versehen. Zusätzlich ist an dem Tragrevolver 9 ein Schmutzsammler 13 angebracht. Die Düsenlagerplätze 12 und der Schmutzsammler 13 sind an dem Tragrevolver 9 in Drehrichtung um die Revolver-Drehachse 11 gegeneinander versetzt angeordnet. In den Figuren 1 und 2 sind die Düsenlagerplätze 12 der Einfachheit halber als Leerplätze dargestellt. Im betrieblichen Einsatz der Düsenwechselvorrichtung 1 an der Laserbearbeitungsmaschine 5 nimmt wenigstens einer der Düsenlagerplätze 12 eine an dem Laserbearbeitungskopf 4 einzuwechselnde Laserdüse 2 auf.

Der Schmutzsammler 13 an dem Tragrevolver 9 bildet einen Schmutzdurchtritt 14 aus, der in einer parallel zu der Revolver-Drehachse 11 verlaufenden Richtung Schmutzpartikel passieren lässt (Figur 3). Zur Dreheinstellung des Tragrevolvers 9 um die Revolver-Drehachse 11 dient eine Positioniervorrichtung 15 für den Tragrevolver 9, die einen elektrischen Positionierantriebsmotor 16 umfasst. Zu dessen Steuerung ist eine in den Abbildungen angedeutete numerische Antriebssteuerung 17 vorgesehen. Diese kann in die numerische Steuerung der Laserbearbeitungsmaschine 5 integriert werden.

An der Düsenwechselvorrichtung 1 ist eine Funktionsbereitschaftsposition 18 definiert. In Figur 1 wird die Funktionsbereitschaftsposition 18 von dem Schmutzsammler 13, im Einzelnen von der Längsachse des Schmutzdurchtritts 14 des Schmutzsammlers 13, eingenommen. Gemäß Figur 2 ist ein dem Schmutzsammler 13 unmittelbar benachbarter Düsenlagerplatz 12 bzw. dessen Mittelachse in die Funktionsbereitschaftsposition 18 bewegt. Die Positionierung sowohl des Schmutzsammlers 13 als auch der Düsenlagerplätze 12 in der Funktionsbereitschaftsposition 18 erfolgt durch den von der numerischen Antriebssteuerung 17 gesteuerten Positionierantriebsmotor 16.

Der in Figur 1 dargestellte Betriebszustand der Düsenwechselvorrichtung 1 ist dem regulären Schneidbetrieb der Laserbearbeitungsmaschine 5 zugeordnet. Die betreffenden Verhältnisse an der Laserbearbeitungsmaschine 5 sind in Figur 3 dargestellt.

Demnach liegt die Düsenwechselvorrichtung 1 während der schneidenden Bearbeitung des Bleches 6 mit dem Schmutzsammler 13 unterhalb einer in einer Werkstückauflage 19 der Laserbearbeitungsmaschine 5 vorgesehenen Durchtrittsöffnung 20. Schmutzpartikel, beispielsweise an der Bearbeitungsstelle des Laserschneidstrahls 7 entstehende Schlacke oder Metallspritzer, die bis zu der Durchtrittsöffnung 20 der Werkstückauflage 19 gelangen, können die unterhalb der Werkstückauflage 19 angeordnete Düsenwechselvorrichtung 1 durch den Schmutzdurchtritt 14 des Schmutzsammlers 13 hindurch unter Schwerkraftwirkung passieren. Dadurch wird verhindert, dass sich die betreffenden Schmutzpartikel an der Düsenwechselvorrichtung 1 ablagern und dann deren Funktionsfähigkeit beeinträchtigen.

Soll die an dem Laserbearbeitungskopf 4 montierte Laserdüse 2 etwa aufgrund eines Wechsels des zu bearbeitenden Materials oder verschmutzungsbedingt gegen eine andere Laserdüse 2 ausgewechselt werden, so wird an der Düsenwechselvorrichtung 1 zunächst ein leerer Düsenlagerplatz 12 in die Funktionsbereitschaftsposition 18 bewegt. Zu diesem Zweck wird der Positionierantriebsmotor 16 der Düsenwechselvorrichtung 1 numerisch gesteuert betätigt. Infolgedessen dreht der Positionierantriebsmotor 16 den Tragrevolver 9 über einen definierten Drehwinkel um die Revolver-Drehachse 11. Dadurch verlässt der Schmutzsammler 13 die Funktionsbereitschaftsposition 18 und ein leerer Düsenlagerplatz 12, welcher auf den Schmutzsammler 13 an dem Tragrevolver 9 folgt, läuft in die Funktionsbereitschaftsposition 18 ein. Gleichzeitig wird eine an der Werkstückauflage 19 vorgesehene falltürartige Ausschleusklappe 21 zum Ausschleusen von Produkten der Werkstückbearbeitung ausgehend von dem geschlossenen Zustand gemäß Figur 3 geöffnet. Der Laserbearbeitungskopf 4 und die Werkstückauflage 19 werden bei geöffneter Ausschleusklappe 21 relativ zueinander bewegt, bis der Laserbearbeitungskopf 4 mit der zu demontierenden Laserdüse 2 oberhalb der Durchtrittsöffnung 20 an der Werkstückauflage 19 und damit auch oberhalb des in der Funktionsbereitschaftsposition 18 befindlichen leeren Düsenlagerplatzes 12 zu liegen kommt. Es ergibt sich damit die Situation gemäß Figur 4.

Ausgehend von diesen Verhältnissen wird die gebrauchte Laserdüse 2 an dem Laserbearbeitungskopf 4 durch die Durchtrittsöffnung 20 hindurch in den ihr gegenüberliegenden Düsenlagerplatz 12 eingesetzt und durch Drehen des Düsenlagerplatzes 12 aus der Düsenaufnahme 3 des Laserbearbeitungskopfes 4 ausgeschraubt. Anschließend wird der Düsenlagerplatz 12, der mit der einzuwechselnden Laserdüse 2 belegt ist, mittels des Positionierantriebsmotors 16 um die Revolver-Drehachse 11 in die Funktionsbereitschaftsposition 18 bewegt. Die einzuwechselnde Laserdüse 2 wird dann durch die Durchtrittsöffnung 20 der Werkstückauflage 19 hindurch in die Düsenaufnahme 3 des Laserbearbeitungskopfes 4 eingeschraubt.

Nach Abschluss des Düsenwechsels dreht der Positionierantriebsmotor 16 wieder den Schmutzsammler 13 in die Funktionsbereitschaftsposition 18, ehe letztlich durch Schließen der Ausschleusklappe 21 und durch eine Relativbewegung von Laserbearbeitungskopf 4 und Werkstückauflage 19 erneut die Verhältnisse gemäß Figur 3 hergestellt werden. Der Schmutzsammler 13 nimmt nun wieder seine dem regulären Schneidbetrieb der Laserbearbeitungsmaschine 5 zugeordnete Drehstellung ein. Die Düsenlagerplätze 12 des Düsenmagazins 8 liegen von der Funktionsbereitschaftsposition 18 ab und sind gegen schädliche Einflüsse der Werkstückbearbeitung geschützt.

## Patentansprüche

1. Maschinelle Vorrichtung zur Montage und/oder zur Demontage einer Laserdüse (2) an einer Düsenaufnahme (3) einer Laserbearbeitungsmaschine (5) zum Bearbeiten von Werkstücken, insbesondere von Blechen (6),
• mit einem Düsenmagazin (8), das wenigstens einen zur Aufnahme einer Laserdüse (2) vorgesehenen Düsenlagerplatz (12) aufweist,
• mit einer an der maschinellen Vorrichtung vorgesehenen Funktionsbereitschaftsposition (18) sowie
• mit einer Positioniervorrichtung (15) für den Düsenlagerplatz (12), wobei der Düsenlagerplatz (12) mittels der hierfür vorgesehenen Positioniervorrichtung (15) in die Funktionsbereitschaftsposition (18) oder in eine von der Funktionsbereitschaftsposition (18) abliegende Position bewegbar ist,
**dadurch gekennzeichnet, dass**
zusätzlich zu dem Düsenlagerplatz (12) ein zur Aufnahme anfallender Schmutzpartikel vorgesehener Schmutzsammler (13) sowie eine Positioniervorrichtung (15) für den Schmutzsammler (13) vorgesehen sind und dass der Schmutzsammler (13) mittels der hierfür vorgesehenen Positioniervorrichtung (15) anstelle des Düsenlagerplatzes (12) in die Funktionsbereitschaftsposition (18) bewegbar ist und dass der Schmutzsammler (13) mittels der hierfür vorgesehenen Positioniervorrichtung (15) außerdem in eine von der Funktionsbereitschaftsposition (18) abliegende Position bewegbar ist.

2. Maschinelle Vorrichtung nach Anspruch 1, **dadurch gekennzeichnet, dass** der Düsenlagerplatz (12) und der Schmutzsammler (13) miteinander bewegungsverbunden sind.

3. Maschinelle Vorrichtung nach einem der vorhergehenden Ansprüche, **dadurch gekennzeichnet, dass** der Düsenlagerplatz (12) und der Schmutzsammler (13) an einem gemeinsamen Träger angebracht sind und dass der Träger mittels eines Positionierantriebes der Positioniervorrichtung (15) für den Düsenlagerplatz (12) und mittels eines Positionierantriebes der Positioniervorrichtung (15) für den Schmutzsammler (13) in Positionen bewegbar ist, bei deren Einnahme der Düsenlagerplatz (12) und der Schmutzsammler (13) jeweils in die Funktionsbereitschaftsposition (18) oder in eine davon abliegende Position bewegt sind.

4. Maschinelle Vorrichtung nach einem der vorhergehenden Ansprüche, **dadurch gekennzeichnet, dass** die Positioniervorrichtung (15) für den Düsenlagerplatz (12) und die Positioniervorrichtung (15) für den Schmutzsammler (13) einen gemeinsamen Positionierantriebsmotor (16) aufweisen.

5. Maschinelle Vorrichtung nach einem der vorhergehenden Ansprüche, **dadurch gekennzeichnet, dass** der Düsenlagerplatz (12) und/oder der Schmutzsammler (13) entlang einer Kreisbahn in die Funktionsbereitschaftsposition (18) oder in eine von der Funktionsbereitschaftsposition (18) abliegende Position bewegbar ist/sind.

6. Maschinelle Vorrichtung nach einem der vorhergehenden Ansprüche, **dadurch gekennzeichnet, dass** als gemeinsamer Träger des Düsenlagerplatzes (12) und des Schmutzsammlers (13) ein Tragrevolver (9) vorgesehen ist, der mittels eines Positionierantriebes der Positioniervorrichtung (15) für den Düsenlagerplatz (12) und/oder mittels eines Positionierantriebes der Positioniervorrichtung (15) für den Schmutzsammler (13) um eine Revolver-Drehachse (11) in Drehstellungen bewegbar ist, bei deren Einnahme der Düsenlagerplatz (12) und der Schmutzsammler (13) jeweils in die Funktionsbereitschaftsposition (18) oder in eine davon abliegende Position bewegt sind.

7. Maschinelle Vorrichtung nach einem der vorhergehenden Ansprüche, **dadurch gekennzeichnet, dass** der Schmutzsammler (13) einen Schmutzdurchtritt (14) ausbildet, durch welchen die maschinelle Vorrichtung von Schmutz passierbar ist.

8. Laserbearbeitungsmaschine zum Bearbeiten von Werkstücken, insbesondere von Blechen (6), mit einer Düsenaufnahme (3) für eine Laserdüse (2), **gekennzeichnet durch** eine maschinelle Vorrichtung (1) nach einem der Ansprüche 1 bis 7 zur Montage und/oder zur Demontage einer Laserdüse (2) an der Düsenaufnahme (3).

## Claims

1. A mechanical device for mounting and/or dismounting a laser nozzle (2) on and/or from a nozzle mount (3) of a laser processing machine (5) for processing workpieces, especially metal sheets (6),
• with a nozzle magazine (8) having at least one nozzle storage location (12) provided for holding a laser nozzle (2),
• with a stand-by position (18) provided on the mechanical device, and
• with a positioning device (15) for the nozzle storage location (12),
wherein the nozzle storage location (12) is movable by means of the positioning device (15) provided for that purpose into the stand-by position (18) or into a position remote from the stand-by position (18),
**characterised in that**
in addition to the nozzle storage location (12), a dirt collector (13), which is provided for receiving dirt particles produced, and a positioning device (15) for the dirt collector (13) are provided and the dirt collector (13) is movable by means of the positioning device (15) provided for that purpose into the stand-by position (18) in place of the nozzle storage location (12) and the dirt collector (13) is also movable by means of the positioning device (15) provided for that purpose into a position remote from the stand-by position (18).

2. A mechanical device according to claim 1, **characterised in that** the nozzle storage location (12) and the dirt collector (13) are connected in motion to each other.

3. A mechanical device according to one of the preceding claims, **characterised in that** the nozzle storage location (12) and the dirt collector (13) are mounted on a common support and the support is movable by means of a positioning drive of the positioning device (15) for the nozzle storage location (12) and by means of a positioning drive of the positioning device (15) for the dirt collector (13) into positions in which the nozzle storage location (12) and the dirt collector (13) have each been moved into the stand-by position (18) or into a position remote therefrom.

4. A mechanical device according to any one of the preceding claims, **characterised in that** the positioning device (15) for the nozzle storage location (12) and the positioning device (15) for the dirt collector (13) have a common positioning drive motor (16).

5. A mechanical device according to any one of the preceding claims, **characterised in that** the nozzle storage location (12) and/or the dirt collector (13) is/are movable into the stand-by position (18) or into a position remote from the stand-by position (18) over a circular path.

6. A mechanical device according to any one of the preceding claims, **characterised in that** there is provided as the common support of the nozzle storage location (12) and the dirt collector (13) a supporting turret (9) which is movable by means of a positioning drive of the positioning device (15) for the nozzle storage location (12) and/or by means of a positioning drive of the positioning device (15) for the dirt collector (13) about the turret rotation axis (11) into rotational positions in which the nozzle storage location (12) and the dirt collector (13) have each been moved into the stand-by position (18) or into a position remote therefrom.

7. A mechanical device according to any one of the preceding claims, **characterised in that** the dirt collector (13) forms a dirt passage (14) through which dirt is able to pass through the mechanical device.

8. A laser processing machine for processing workpieces, especially metal sheets (6), having a nozzle mount (3) for a laser nozzle (2), **characterised by** a mechanical device (1) according to any one of claims 1 to 7 for mounting and/or dismounting a laser nozzle (2) on and/or from the nozzle mount (3).

## Revendications

1. Dispositif mécanique destiné au montage et/ou au démontage d'une tuyère laser (2) sur un logement de tuyère (3) d'une machine d'usinage au laser (5) pour l'usinage de pièces, en particulier de tôles (6),
- avec un magasin de tuyères (8) qui présente au moins un emplacement (12) de stockage de tuyère prévu pour recevoir une tuyère laser (2),
- avec une position (18) de disponibilité au fonctionnement prévue sur le dispositif mécanique,
- et avec un dispositif de positionnement (15) pour l'emplacement (12) de stockage de tuyère,
sachant que l'emplacement (12) de stockage de tuyère peut, au moyen du dispositif de positionnement (15) prévu à cet effet, être déplacé dans la position (18) de disponibilité au fonctionnement ou dans une position éloignée de la position (18) de disponibilité au fonctionnement,
**caractérisé en ce qu'**il est prévu, en plus de l'emplacement (12) de stockage de tuyère, un collecteur d'impuretés (13) prévu pour recueillir les particules d'impuretés produites et un dispositif de positionnement (15) pour le collecteur d'impuretés (13), **en ce que** le collecteur d'impuretés (13) peut, au moyen du dispositif de positionnement (15) prévu à cet effet, être déplacé à la place de l'emplacement (12) de stockage de tuyère dans la position (18) de disponibilité au fonctionnement, et **en ce que** le collecteur d'impuretés (13) peut en outre, au moyen du dispositif de positionnement (15) prévu à cet effet, être déplacé dans une position éloignée de la position (18) de disponibilité au fonctionnement.

2. Dispositif mécanique selon la revendication 1, **caractérisé en ce que** l'emplacement (12) de stockage de tuyère et le collecteur d'impuretés (13) sont mutuellement reliés en déplacement.

3. Dispositif mécanique selon l'une des revendications précédentes, **caractérisé en ce que** l'emplacement (12) de stockage de tuyère et le collecteur d'impuretés (13) sont installés sur un élément porteur commun, et **en ce que** l'élément porteur peut, au moyen d'un entraînement de positionnement du dispositif de positionnement (15) pour l'emplacement (12) de stockage de tuyère et au moyen d'un entraînement de positionnement du dispositif de positionnement (15) pour le collecteur d'impuretés (13), être déplacé dans des positions dans lesquelles l'emplacement (12) de stockage de tuyère et le collecteur d'impuretés (13) sont respectivement déplacés dans la position (18) de disponibilité au fonctionnement ou dans une position éloignée de celle-ci.

4. Dispositif mécanique selon l'une des revendications précédentes, **caractérisé en ce que** le dispositif de positionnement (15) pour l'emplacement (12) de stockage de tuyère et le dispositif de positionnement (15) pour le collecteur d'impuretés (13) présentent un moteur commun (16) d'entraînement de positionnement.

5. Dispositif mécanique selon l'une des revendications précédentes, **caractérisé en ce que** l'emplacement (12) de stockage de tuyère et/ou le collecteur d'impuretés (13) peut/peuvent être déplacés le long d'une trajectoire circulaire dans la position (18) de disponibilité au fonctionnement ou dans une position éloignée de la position (18) de disponibilité au fonctionnement.

6. Dispositif mécanique selon l'une des revendications précédentes, **caractérisé en ce que**, comme élément porteur commun de l'emplacement (12) de stockage de tuyère et du collecteur d'impuretés (13), il est prévu une tourelle revolver porteuse (9) qui, au moyen d'un entraînement de positionnement du dispositif de positionnement (15) pour l'emplacement (12) de stockage de tuyère et/ou au moyen d'un entraînement de positionnement du dispositif de positionnement (15) pour le collecteur d'impuretés (13), peut être déplacée autour d'un axe de tourelle révolver (11) dans des positions de rotation dans lesquelles l'emplacement (12) de stockage de tuyère et le collecteur d'impuretés (13) sont respectivement déplacés dans la position (18) de disponibilité au fonctionnement ou dans une position éloignée de celle-ci.

7. Dispositif mécanique selon l'une des revendications précédentes, **caractérisé en ce que** le collecteur d'impuretés (13) forme un passage d'impuretés (14) par lequel les impuretés peuvent passer à travers le dispositif mécanique.

8. Machine d'usinage au laser pour l'usinage de pièces, en particulier de tôles (6), avec un logement de tuyère (3) pour une tuyère laser (2), **caractérisée par** un dispositif mécanique (1) selon l'une des revendications 1 à 7, destiné au montage et/ou au démontage d'une tuyère laser (2) sur le logement de tuyère (3).
